# EUROPEAN PATENT APPLICATION

(11) **EP 2 410 667 A1**
(43) Date of publication of application: **25.01.2012**
(21) Application number: 10753096.6
(22) Date of filing: 09.03.2010
(51) Int. Cl.: H04B 7/14

(54) **PROCESSING METHOD, APPARATUS AND SYSTEM IN A RELAY SYSTEM**

(30) Priority: 16.03.2009 CN 200910079988
(71) Applicant: ZTE Corporation, Shenzhen, Guangdong 518057 (CN)
(72) Inventor: MAO, Lei, Shenzhen Guangdong 518057 (CN); MA, Zijiang, Shenzhen Guangdong 518057 (CN)
(74) Representative: Jansen, Cornelis Marinus
(86) International application number: PCT/CN2010/070939
(87) International publication number: WO 2010/105529

(57) **Abstract**

The present invention discloses a processing method, an apparatus and a system in a relay system. In the solution of the present invention, a network side provides configured broadcast service configuration information to a UE, wherein the broadcast service configuration information comprises configuration information of broadcast service in a relay subframe and a service subframe; according to the broadcast service configuration information, the UE receives broadcast service information on a corresponding relay subframe and service subframe, which makes the originally idle relay subframe for the UE be fully used. Furthermore, the UE combines the broadcast service information received on the relay frame with that received on the service frame, which improves the receiving quality of the broadcast service, and enhances the receiving performance of the broadcast service.

## Description

### Technical field

The present invention relates to wireless communication technologies, and in particular to a processing method, an apparatus and a system in a relay system.

### Background

A working group of Long Term Evolution (LTE) research is started for the 3rd Generation Partnership Project (3GPP) in 2005, for researching and designing 3.9G evolved from the 3rd generation wireless communication (3G) technology, namely a next generation network evolved from the 3G.

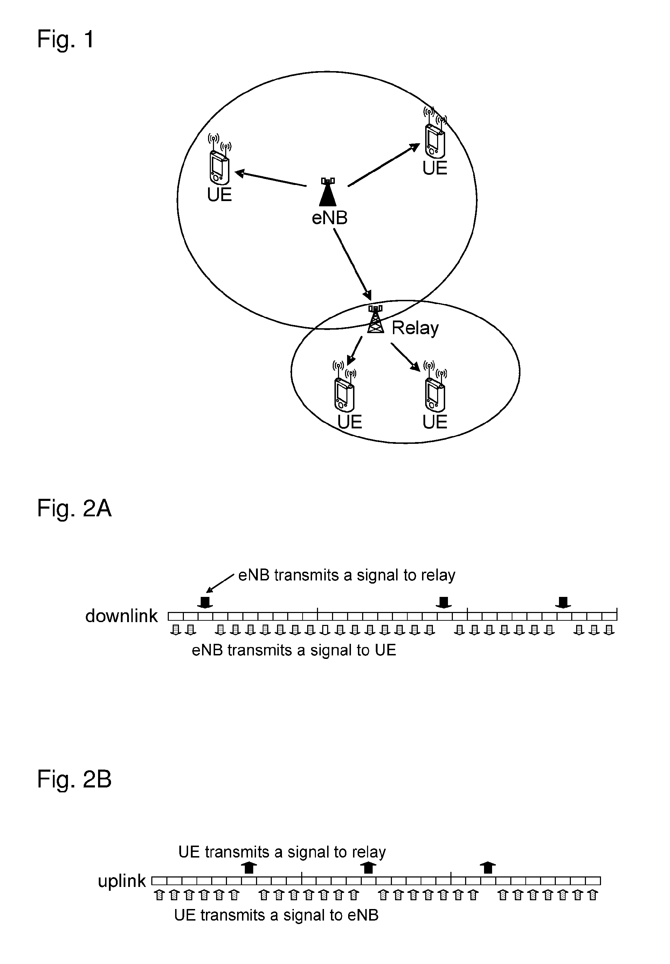

At present, to increase the coverage gain of the cell border and achieve the blind-compensating effect, the relay technology is introduced into the LTE-advanced technology of 3GPP. As shown in Fig. 1, an evolved node B (eNB) not only provides service to the user equipment (UE) of the local cell, but also performs data transmission and signaling interaction together with multiple relays which are under its control; likewise, each relay not only communicates with the eNB, but also provides service to the UE under the relay.

A link from eNB to the relay and a link from the relay to the UE served by the relay may adopt the same frequency resources, and such realizing manner is called in-band relay; they may adopt different frequency resources, and such realizing manner is called out-of-band relay. In the case of in-band relay, on the downlink, as shown in Fig. 2A, when the eNB transmits a signal to a certain relay which is under the control of the eNB on a certain/some subframes, the relay can only receive the signal from the eNB on the corresponding subframe, rather than transmit a signal to the UE served by the relay on the downlink simultaneously, otherwise, stronger interference will be generated. For the same reason, on the uplink, as shown in Fig. 2B, when the UE transmits a signal to the relay serving for it on a certain/some subframes, the relay can only receive the signal from the UE on the corresponding subframe, rather than transmit a signal to the eNB controlling the relay on the uplink simultaneously. The signal comprises data and/or signaling.

On a certain/some subframes of the downlink, the relay needs to receive a signal from its controlling net element. The net element may be an eNB, or a Gateway GPRS Support Node (GGSN), or a Radio Network Controller (RNC) and the like. On a subframe, because the relay needs to receive the signal from its controlling net element, to prevent the interference caused by simultaneous transmission and reception of data, the relay cannot transmit data to the UE under its service simultaneously. That is to say, the relay cannot transmit a signal and receive a signal on one subframe simultaneously. The special subframe for the relay and its controlling net element to transmit signals is called relay subframe, which includes uplink relay subframe and downlink relay subframe. The uplink relay subframe is used for the relay to transmit a signal to its controlling net element, here the UE cannot transmit an uplink signal to the relay; the downlink relay subframe is used for the relay to receive a signal from its controlling net element; and the UE is not notified of receiving the signal on the downlink relay subframe.

Besides the relay subframe, subframes for the relay and the UE under its service to transmit signals is called service subframe, which includes uplink service subframe and downlink service subframe. For the downlink service subframe, the relay transmits a signal to the UE, and the UE receives the signal; for the uplink service subframe, the UE transmits a signal to the relay, and the relay receives the signal.

It can be seen from the above description that the downlink relay subframe is mainly used for the controlling net element to transmit signals to the relay, and the UE is not notified of receiving the signal on the downlink relay subframe, so the downlink relay subframe is an idle time for the UE.

### Summary

In view of this, the present invention mainly aims to provide a processing method, an apparatus and a system in a relay system, so that the UE can make use of the idle time of the relay subframe to further improve the receiving quality by using the reception of UE on the relay subframe.

To achieve the above purpose, the technical solution of the present invention is realized as follows.

A processing method in a relay system comprises:
receiving by a User Equipment (UE) broadcast service configuration information configured by a network side, wherein the broadcast service configuration information comprises configuration information of broadcast service in a relay subframe and a service subframe;
receiving by the UE broadcast service information on a corresponding relay subframe and service subframe according to the broadcast service configuration information.

In the method, after receiving the broadcast service information, the method may further comprise: combining the broadcast service information received on the relay frame with that received on the service frame.

In the method, the broadcast service configuration information configured by the network side may include a relay technology type;
the relay technology type indicates that when transmission parameter of the broadcast service information on the relay subframe is the same as that on the service subframe, the broadcast service configuration information configured by the network side may further include: transmission parameter of the broadcast service, and time information of the relay subframe and the service subframe;
the relay technology type indicates that when transmission parameter of the broadcast service information on the relay subframe is different from that on the service subframe, the broadcast service configuration information configured by the network side may further include: transmission parameter information of the relay subframe and the service subframe, and time information of the relay subframe and the service subframe.

In the method, when frequency used by a relay link is different from the frequency used by a service link, the broadcast service configuration information configured by the network side may further include: frequency information of the relay link and the service link.

In the method, the frequency information of the relay link and the service link may be that: the frequency used by the relay link and the frequency used by the service link; or the frequency used by the relay link and an offset of the frequency used by the service link with respect to the frequency used by the relay link; or the frequency used by the service link and an offset of the frequency used by the relay link with respect to the frequency used by the service link.

In the method, the time information of the relay subframe and the service subframe may be that: a frame number of the relay subframe and a frame number of the service subframe; or the frame number of the relay subframe and an time offset of the service subframe with respect to the relay subframe; or the frame number of the service subframe and an time advance of the relay subframe with respect to the service subframe;
and/or,
the transmission parameter information of the relay subframe and the service subframe may be that: a transmission parameter of the relay subframe and a transmission parameter of the service subframe; or same parameter information in the transmission parameter of the relay subframe and the transmission parameter in the service subframe and different parameter information in the transmission parameter of the relay subframe and the transmission parameter in the service subframe; or the transmission parameter of the relay subframe, and an offset manner of the transmission parameter of the service subframe with respect to the transmission parameter of the relay subframe; or the transmission parameter of the service subframe and an offset manner of the transmission parameter of the relay subframe with respect to the transmission parameter of the service subframe;
and/or,
the transmission parameter of the broadcast service may include any one of or the combination of any of: encoding manner, modulating manner, transmission format and resource information.

A processing system comprises a network side and a UE, wherein
the network side is used for providing configured broadcast service configuration information to the UE, wherein the broadcast service configuration information comprises configuration information of broadcast service in a relay subframe and a service subframe;
the UE is used for receiving broadcast service information on a corresponding relay subframe and service subframe according to the broadcast service configuration information.

The UE may be further used for combining the broadcast service information received on the relay frame with that received on the service frame.

A processing apparatus in a relay system comprises a receiving unit and an analyzing unit, wherein
the receiving unit is used for receiving broadcast service configuration information configured by a network side, wherein the broadcast service configuration information comprises configuration information of broadcast service in a relay subframe and a service subframe; and further used for, according to the configuration information of the broadcast service in the relay subframe and the service subframe, receiving broadcast service information on a corresponding relay subframe and service subframe;
the analyzing unit is used for analyzing the broadcast service configuration information to obtain the configuration information of the broadcast service in the relay subframe and the service subframe.

The apparatus may further comprise: a combining unit for combining the broadcast service information received on the relay frame with that received on the service frame.

In the solution of the present invention, the network side provides the configured broadcast service configuration information to the UE, wherein the broadcast service configuration information comprises the configuration information of the broadcast service in the relay subframe and the service subframe; the UE receives the broadcast service information on the corresponding relay subframe and service subframe according to the broadcast service configuration information, which makes the originally idle relay subframe for the UE be fully used. Furthermore, the UE combines the broadcast service information received on the relay frame with that received on the service frame, which improves the receiving quality of the broadcast service, and enhances the receiving performance of the broadcast service.

### Brief description of the drawings

Fig. 1 shows a schematic drawing of information transmission of the cell where a relay exists;
Fig. 2A shows a schematic drawing of time sequence of relay transmission and reception on the downlink;
Fig. 2B shows a schematic drawing of time sequence of relay transmission and reception on the uplink;
Fig. 3A shows a schematic drawing that the relay and UE receive broadcast service information on the relay subframe simultaneously in the present invention;
Fig. 3B shows a schematic drawing that the UE receives the broadcast service information on the service subframe in the present invention;
Fig. 4 shows a structural schematic drawing of a system provided by the present invention;
Fig. 5 shows a structural schematic drawing of an apparatus provided by the present invention.

### Detailed description

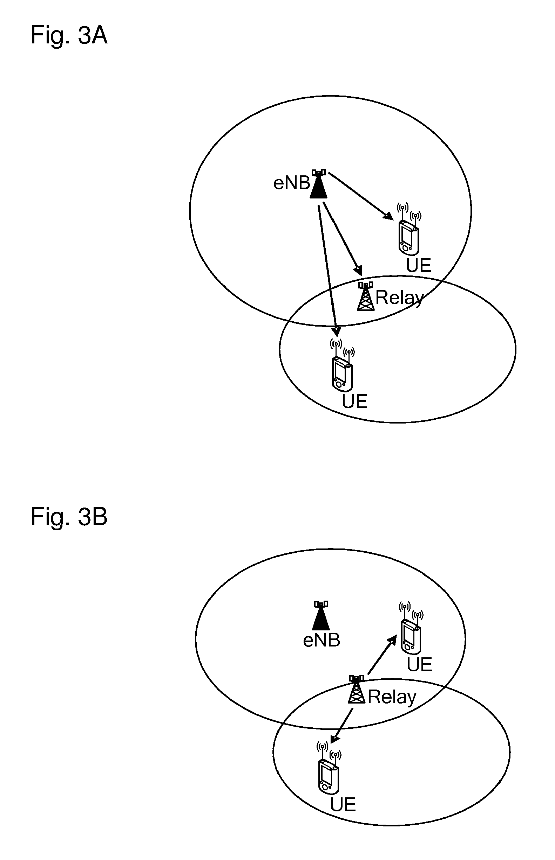

In the present invention, a network side provides configured broadcast service configuration information to a UE, wherein the broadcast service configuration information comprises configuration information of the broadcast service in the relay subframe and the service subframe; according to the broadcast service configuration information, the UE receives the broadcast service information on the corresponding relay subframe and service subframe. That is to say, the relay and the UE receive the broadcast service information on the relay subframe simultaneously, as shown in Fig. 3A; and the UE also receives the broadcast service information on the service subframe, as shown in Fig. 3B. The broadcast service information received by the UE on the relay subframe and the broadcast service information received by the UE on the service subframe have the same content. Furthermore, UE combines the broadcast service information received on the relay subframe with that received on the service subframe to improve the receiving quality of the broadcast service.

The configuration information of the broadcast service in the relay subframe and the service subframe includes: time information of the relay subframe and the service subframe; a transmission parameter of the broadcast service when the broadcast service is transmitted on the relay subframe and the service subframe. When the frequency used by the relay link is different from the frequency used by the service link, the configuration information of the broadcast service in the relay subframe and the service subframe further includes frequency information of the relay link and the service link.

The specific implementation of the present invention is discussed below with reference to several specific embodiments in details.

### Embodiment 1

A layer one in-band relay technology is adopted in the LTE system, namely, the relay just forwards the broadcast service information transmitted by the eNB on the relay subframe to the broadcast service information on the service subframe without performing complex processing, so a transmission parameter of the broadcast service information does not change. That is to say, the transmission parameter of the broadcast service information transmitted by the eNB to the relay on the relay subframe is the same as the transmission parameter of the broadcast service information transmitted by the relay to the UE on the service subframe.

In order to enable the UE to receive the broadcast service information on the relay subframe and the service subframe respectively, besides the transmission parameter of the broadcast service, the broadcast service configuration information has also to be configured by the eNB with: the layer one relay technology adopted currently to indicate the UE to receive the broadcast service information on the relay subframe and the service subframe respectively, and indicate the UE that the broadcast service information received on the relay subframe is the same as that received on the service subframe; time information of the relay subframe and the service subframe for indicating the UE the moment where the relay subframe is and the moment where the service subframe is. The eNB and relay transmit the broadcast service configuration information to the UE in a broadcast manner.

The transmission parameter includes any one of or the combination of any of: encoding manner, modulating manner, transmission format, resource information and the like.

The time information of the relay subframe and the service subframe may be the frame number of the relay subframe and the frame number of the service subframe. For example, if the relay subframe is configured on the subframe 3, the service subframe is configured on the subframe 5, the time information of the relay subframe and the service subframe may be the frame number 3 of the relay subframe and the frame number 5 of the service subframe, respectively. The time information of the relay subframe and the service subframe may also be the frame number of the relay subframe and the time offset of the service subframe with respect to the relay subframe. For example, if the relay subframe is configured on the subframe 3, the service subframe is configured on the subframe 5, the time information of the relay subframe and the service subframe may be the frame number 3 of the relay subframe and the time offset 2, respectively. In this way, the UE can determine the frame number of the service subframe according to the frame number of the relay subframe and the time offset. The time information of the relay subframe and the service subframe may also be the frame number of the service subframe and the time advance of the relay subframe with respect to the service subframe. For example, if the relay subframe is configured on the subframe 3, the service subframe is configured on the subframe 5, the time information of the relay subframe and the service subframe may be the frame number 5 of the service subframe and the time advance 2, respectively. In this way, the UE can determine the frame number of the relay subframe according to the frame number of the service subframe and the time advance.

After receiving the broadcast service configuration information, the UE, according to the broadcast service configuration information, determines to receive the broadcast service information on the relay subframe and the service subframe respectively, and determines that the broadcast service information received on the relay subframe is the same as that received on the service subframe, determines the frame number of the relay subframe and the frame number of the service subframe according to the time information of the relay subframe and the service subframe, and acquires the transmission parameter of the broadcast service information.

The eNB transmits broadcast service information to the relay via an air interface on the relay subframe, and adopts an omnidirectional transmission manner; in this way, the broadcast service information can be transmitted to the UE in the neighborhood of the eNB simultaneously. The relay also transmits the broadcast service information to the UE on the service subframe in the omnidirectional transmission manner. The UE receives the broadcast service information according to the transmission parameter on the relay subframe and the service subframe respectively, and combines the broadcast service information in layer one so as to improve the receiving quality of the broadcast service.

### Embodiment 2

A layer three in-band relay technology is adopted in the LTE system, namely, the relay processes the broadcast service information transmitted by the eNB on the relay subframe, and then transmits it to the UE on the service subframe. That is to say, the transmission parameter of the broadcast service information transmitted by the eNB to the relay on the relay subframe is different from the transmission parameter of the broadcast service information transmitted by the relay to the UE on the service subframe. The broadcast service information from the eNB is processed by the relay, so the broadcast service information transmitted by the eNB to the relay on the relay subframe is different from the broadcast service information transmitted by the relay to the UE on the service subframe, however, the contents included in the broadcast service information transmitted on the two subframes are the same, since they come from a same broadcast service in nature. So, the UE can also use the broadcast service information received on the two subframes to improve the receiving quality.

In order to enable the UE to receive the broadcast service information on the relay subframe and the service subframe respectively, the broadcast service configuration information has to be configured by the eNB with: the layer three in-band relay technology adopted currently to indicate the UE to receive the broadcast service information on the relay subframe and the service subframe respectively, and indicate the UE that the broadcast service information received on the relay subframe is different from the broadcast service information received on the service subframe; time information of the relay subframe and the service subframe for indicating the UE the moment where the relay subframe is and the moment where the service subframe is; transmission parameter information of the relay subframe and the service subframe for indicating the UE the transmission parameter of the broadcast service information on the relay subframe and the transmission parameter of the broadcast service information on the service subframe. The eNB and the relay transmit broadcast service configuration information to the UE in the broadcast manner.

The transmission parameter includes any one of or the combination of any of: encoding manner, modulating manner, transmission format, resource information and the like.

The time information of the relay subframe and the service subframe may be the frame number of the relay subframe and the frame number of the service subframe; may also be the frame number of the relay subframe and the time offset of the service subframe with respect to the relay subframe; and may also be the frame number of the service subframe and the time advance of the relay subframe with respect to the service subframe.

The transmission parameter information of the relay subframe and the service subframe may be the transmission parameter of the relay subframe and the transmission parameter of the service subframe. The transmission parameter information of the relay subframe and the service subframe may also be the same parameter information in the transmission parameter of the relay subframe and the transmission parameter of the service subframe, and the different parameter information in the transmission parameter of the relay subframe and the transmission parameter of the service subframe, namely, the same part in the transmission parameter of the relay subframe and the transmission parameter of the service subframe is configured once, and the different parts in the transmission parameter of the relay subframe and the transmission parameter of the service subframe are configured respectively, which can be realized in the list form specifically. The transmission parameter information of the relay subframe and the service subframe may also be the transmission parameter of the relay subframe, and the offset manner of the transmission parameter of the service subframe with respect to the transmission parameter of the relay subframe; or the transmission parameter of the service subframe, and the offset manner of the transmission parameter of the relay subframe with respect to the transmission parameter of the service subframe so as to save the signaling overhead. For example, if the encoding manner of the relay subframe is encoding manner 1, the encoding manner of the service subframe is encoding manner 5, the encoding manner of the relay subframe, and the offset manner of the encoding manner of the service subframe with respect to the encoding manner of the relay subframe may be encoding manner 1 and offset manner 4, respectively; in this way, the UE can determine the encoding manner of the relay subframe to be encoding manner 1, and the encoding manner of the service subframe to be the encoding manner 5.

After receiving the broadcast service configuration information, the UE, according to the broadcast service configuration information, determines to receive the broadcast service information on the relay subframe and the service subframe respectively, and determines that the broadcast service information received on the relay subframe is different from that received on the service subframe, determines the frame number of the relay subframe and the frame number of the service subframe according to the time information of the relay subframe and the service subframe, and acquires the transmission parameter of the broadcast service information on the relay subframe and the service subframe.

The eNB transmits broadcast service information to the relay via the air interface on the relay subframe, and adopts the omnidirectional transmission manner; in this way, the broadcast service information can be transmitted to the UE in the neighborhood of the eNB simultaneously. The relay also transmits the broadcast service information to the UE on the service subframe in the omnidirectional transmission manner. The UE receives the broadcast service information according to the transmission parameter on the relay subframe and the service subframe respectively, and combines the broadcast service information in layer three so as to improve the receiving quality of the broadcast service.

When the layer two in-band relay technology is adopted, because the relay also has to process the broadcast service information, the broadcast service information transmitted on the relay subframe is different from that transmitted on the service subframe. Thus, the specific processing when the layer two in-band relay technology is adopted may make reference to the specific implementation when the layer three in-band relay technology is adopted.

### Embodiment 3

An out-of-band relay technology is adopted in the LTE system, namely, the frequency used by the relay link from the eNB to the relay is different from the frequency used by the service link from the relay to the UE; the relay link and the service link can either transmit the broadcast service information simultaneously, or transmit the broadcast service information in a time division manner.

In order to enable the UE to receive the broadcast service information on the relay subframe and the service subframe respectively, the broadcast service configuration information has to be configured by the eNB with: the relay technology type adopted currently, to indicate the UE to receive the broadcast service information on the relay subframe and the service subframe respectively, and indicate the UE whether the broadcast service information received on the relay subframe is the same as that received on the service subframe; frequency information of the relay link and the service link for indicating the UE the frequency used by the relay link and the frequency used by the service link; time information of the relay subframe and the service subframe for indicating the UE the moment where the relay subframe is and the moment where the service subframe is. If the layer one out-of-band relay technology is adopted, the eNB also has to configure the transmission parameter of the broadcast service; if the layer two or layer three out-of-band relay technology is adopted, the eNB also has to configure the transmission parameter information of the relay subframe and the service subframe for indicating the UE the transmission parameter of the broadcast service information on the relay subframe and the transmission parameter of the broadcast service information on the service subframe. The eNB transmits the broadcast service configuration information to the UE in the broadcast manner.

The transmission parameter includes any one of or the combination of any of: encoding manner, modulating manner, transmission format, resource information and the like.

The time information of the relay subframe and the service subframe may be the frame number of the relay subframe and the frame number of the service subframe; may also be the frame number of the relay subframe and the time offset of the service subframe with respect to the relay subframe; and may also be the frame number of the service subframe and the time advance of the relay subframe with respect to the service subframe.

The frequency information of the relay link and the service link may be the frequency used by the relay link and the frequency used by the service link; may also be the frequency used by the relay link, and the offset of the frequency used by the service link with respect to the frequency used by the relay link; or the frequency used by the service link, and the offset of the frequency used by the relay link with respect to the frequency used by the service link, so as to save the signaling overhead.

If the layer three out-of-band relay technology is adopted, the transmission parameter configured by the eNB is substantially the same as that described in embodiment 2, thus, it is unnecessary to give more details here.

After receiving the broadcast service configuration information, the UE, according to the broadcast service configuration information, determines to receive the broadcast service information on the relay subframe and the service subframe respectively, and determines whether the broadcast service information received on the relay subframe is the same as that received on the service subframe, determines the frequency used by the relay link and the frequency used by the service link according to the frequency information of the relay link and the service link; determines the frame number of the relay subframe and the frame number of the service subframe according to the time information of the relay subframe and the service subframe, and acquires the transmission parameter of the broadcast service information.

The eNB transmits broadcast service information to the relay via the air interface on the relay subframe, and adopts the omnidirectional transmission manner; in this way, the broadcast service information can be transmitted to the UE in the neighborhood of the eNB simultaneously. The relay also transmits the broadcast service information to the UE on the service subframe in the omnidirectional transmission manner. If the capacity of the UE can meet requirement, the UE receives the broadcast service information according to the transmission parameter at the frequency corresponding to the relay link and at the frequency corresponding to the service link respectively, and then combines the broadcast service information, so as to improve the receiving quality of the broadcast service.

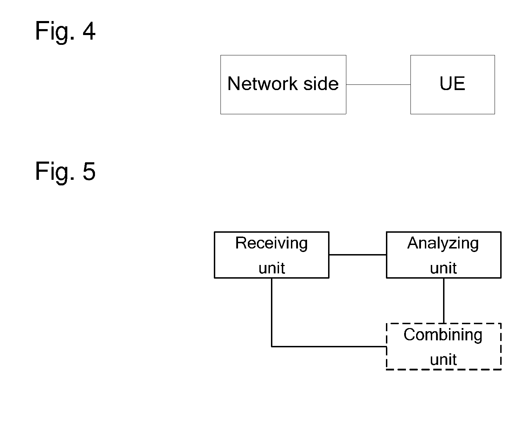

The present invention also provides a processing system as shown in Fig. 4, which includes a network side and a UE, wherein the network side is used for providing the configured broadcast service configuration information to the UE, wherein the broadcast service configuration information comprises the configuration information of the broadcast service in a relay subframe and a service subframe; the UE is used for receiving the broadcast service information on the corresponding relay subframe and service subframe according to the broadcast service configuration information. The UE is further used for combining the broadcast service information received on the relay frame with that received on the service frame. The network side may comprise an eNB and a relay, wherein the eNB is used for transmitting broadcast service information on the relay subframe; the relay is used for transmitting the broadcast service information received on the relay subframe on the service subframe. Specific implementations of respective parts may make reference to the descriptions of embodiment 1 to embodiment 3, so it is unnecessary to give more details here.

The present invention also provides a processing apparatus in a relay system as shown in Fig. 5, which includes a receiving unit and an analyzing unit, wherein the receiving unit is used for receiving the broadcast service configuration information configured by a network side and providing it to the analyzing unit, wherein the broadcast service configuration information comprises the configuration information of the broadcast service in a relay subframe and a service subframe; and further used for, according to the configuration information of the broadcast service in the relay subframe and the service subframe, receiving the broadcast service information on the corresponding relay subframe and service subframe; the analyzing unit is used for analyzing the broadcast service configuration information to obtain the configuration information of the broadcast service in the relay subframe and the service subframe. The apparatus further includes a combining unit for combining the broadcast service information received on the relay frame with that received on the service frame. Specific implementations of respective parts may make reference to the descriptions about UE in embodiment 1 to embodiment 3, so it is unnecessary to give more details here.

To sum up, the above are only the preferred embodiments of the present invention and not intended to limit the scope of protection of the present invention.

## Claims

1. A processing method in a relay system, comprising:
receiving by a User Equipment (UE) broadcast service configuration information configured by a network side, wherein the broadcast service configuration information comprises configuration information of broadcast service in a relay subframe and a service subframe;
receiving by the UE broadcast service information on a corresponding relay subframe and service subframe according to the broadcast service configuration information.

2. The method according to claim 1, after receiving the broadcast service information, the method further comprising: combining the broadcast service information received on the relay frame with that received on the service frame.

3. The method according to claim 1 or 2, wherein the broadcast service configuration information configured by the network side includes a relay technology type;
the relay technology type indicates that when transmission parameter of the broadcast service information on the relay subframe is the same as that on the service subframe, the broadcast service configuration information configured by the network side further includes: transmission parameter of the broadcast service, and time information of the relay subframe and the service subframe;
the relay technology type indicates that when transmission parameter of the broadcast service information on the relay subframe is different from that on the service subframe, the broadcast service configuration information configured by the network side further includes: transmission parameter information of the relay subframe and the service subframe, and time information of the relay subframe and the service subframe.

4. The method according to claim 3, wherein when frequency used by a relay link is different from frequency used by a service link, the broadcast service configuration information configured by the network side further includes: frequency information of the relay link and the service link.

5. The method according to claim 4, wherein the frequency information of the relay link and the service link is that: the frequency used by the relay link and the frequency used by the service link; or the frequency used by the relay link and an offset of the frequency used by the service link with respect to the frequency used by the relay link; or the frequency used by the service link and an offset of the frequency used by the relay link with respect to the frequency used by the service link.

6. The method according to claim 3, wherein the time information of the relay subframe and the service subframe is that: a frame number of the relay subframe and a frame number of the service subframe; or the frame number of the relay subframe and an time offset of the service subframe with respect to the relay subframe; or the frame number of the service subframe and an time advance of the relay subframe with respect to the service subframe;
and/or,
the transmission parameter information of the relay subframe and the service subframe is that: a transmission parameter of the relay subframe and a transmission parameter of the service subframe; or same parameter information in the transmission parameter of the relay subframe and the transmission parameter of the service subframe and different parameter information in the transmission parameter of the relay subframe and the transmission parameter of the service subframe; or the transmission parameter of the relay subframe and an offset manner of the transmission parameter of the service subframe with respect to the transmission parameter of the relay subframe; or the transmission parameter of the service subframe and an offset manner of the transmission parameter of the relay subframe with respect to the transmission parameter of the service subframe;
and/or,
the transmission parameter of the broadcast service includes any one of or the combination of any of: encoding manner, modulating manner, transmission format and resource information.

7. A processing system, comprising a network side and a UE, wherein
the network side is used for providing configured broadcast service configuration information to the UE, wherein the broadcast service configuration information comprises configuration information of broadcast service in a relay subframe and a service subframe;
the UE is used for receiving broadcast service information on a corresponding relay subframe and service subframe according to the broadcast service configuration information.

8. The system according to claim 7, wherein the UE is further used for combining the broadcast service information received on the relay frame with that received on the service frame.

9. A processing apparatus in a relay system, comprising a receiving unit and an analyzing unit, wherein
the receiving unit is used for receiving broadcast service configuration information configured by a network side, wherein the broadcast service configuration information comprises configuration information of broadcast service in a relay subframe and a service subframe; and further used for, according to the configuration information of the broadcast service in the relay subframe and the service subframe, receiving broadcast service information on a corresponding relay subframe and service subframe;
the analyzing unit is used for analyzing the broadcast service configuration information to obtain the configuration information of the broadcast service in the relay subframe and the service subframe.

10. The apparatus according to claim 9, further comprising: a combining unit for combining the broadcast service information received on the relay frame with that received on the service frame.
